(19) Europäisches Patentamt
European Patent Office
Office européen des brevets

(11) **EP 2 429 177 A1**

(12) **EUROPEAN PATENT APPLICATION**
published in accordance with Art. 153(4) EPC

(43) Date of publication:
**14.03.2012 Bulletin 2012/11**

(21) Application number: **10772106.0**

(22) Date of filing: **22.04.2010**

(51) Int Cl.:
*H04N 5/232* (2006.01)        *H04N 5/225* (2006.01)

(86) International application number:
**PCT/JP2010/002916**

(87) International publication number:
**WO 2010/128579 (11.11.2010 Gazette 2010/45)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **07.05.2009 JP 2009112996**

(71) Applicant: **Panasonic Corporation**
**Kadoma-shi**
**Osaka 571-8501 (JP)**

(72) Inventors:
• **ISHII, Yasunori**
**Chuo-ku**
**Osaka-shi**
**Osaka 540-6207 (JP)**

• **MONOBE, Yusuke**
**Chuo-ku**
**Osaka-shi**
**Osaka 540-6207 (JP)**
• **OGURA, Yasunobu**
**Chuo-ku**
**Osaka-shi**
**Osaka 540-6207 (JP)**

(74) Representative: **Unland, Jochen Hermann**
**Eisenführ, Speiser & Partner**
**P.O. Box 10 60 78**
**28060 Bremen (DE)**

(54) **ELECTRON CAMERA, IMAGE PROCESSING DEVICE, AND IMAGE PROCESSING METHOD**

(57)    An image processing apparatus is provided which is capable of stably tracking a target even when an amount of characteristics of an image of the target varies on input pictures due to an abrupt movement of the target or other causes. An image processing apparatus (10) which tracks an image of a target on an input image includes a blur detection unit (12) detecting a trajectory of blur that is a trajectory indicating blur in a search region on the input picture, the search region including the image of the target and being determined using a picture captured temporally before the input picture; and a tracking processing unit (13) tracking the image of the target by specifying a target region using an end point of the trajectory of blur detected by the blur detection unit (12), the target region being a region including the image of the target and being smaller than the search region.

FIG. 1

EP 2 429 177 A1

## Description

[Technical Field]

The present invention relates to digital cameras, image processing apparatuses, and the like, and particularly to a digital camera, an image processing apparatus, and the like which track images of a target on input pictures.

[Background Art]

Recent digital cameras have an object-tracking function as positioning means for an auto-focus (AF), automatic exposure (AE), or backlight compensation function. Digital cameras are cameras for capturing still images and/or cameras for capturing moving images.

For example, in the case where a digital camera includes a touch panel as means for displaying an image being captured or an image to be captured, a user touches the touch panel to specify an image of a target to be tracked. As another example, a user orients a camera to include an object desired to be tracked, in a predetermined region such as the center of a display screen, and thereafter presses a tracking button to specify an image of the target displayed in the region, as an image of a target.

In the digital camera, a region including an image of the target, i.e., a target region, is then specified on a picture taken after the image of the target is specified, to track images of the target. Generally, digital cameras search for a region having a similar amount of characteristics to the amount of characteristics of the specified image of the target, to specify the target region (refer to PTL 1, for example). Specifically, the digital cameras search for the target region through template matching in which information of colors is used as an amount of characteristics, for example.

[Citation List]

[Patent Literature]

[PTL 1]
Japanese Unexamined Patent Application Publication 2009-48428

[Summary of Invention]

However, an amount of characteristics indicated by an image of the target varies, when the target is an object which makes quick movement, such as a child, or when a user who is poor at operating a digital camera gives it a strong left and right or up and down shake upon taking pictures, or when the frame rate (the number of pictures taken per second) is small in a dark environment, or in the like case. A conventional digital camera which specifies a target region with use of the amount of characteristics therefore has a problem of being unable to correctly track the target.

In view of the above conventional problems, the present invention has been devised and an object thereof is to provide a digital camera, an image processing apparatus, or the like which is capable of stably tracking the target even when an amount of characteristics in an image of a target varies on input pictures due to an abrupt movement of the target or other causes.

[Technical Problem]

In order to achieve the above object, a digital camera according to an aspect of the present invention is a digital camera which tracks an image of a target on an input picture and executes, using a result of the tracking, at least one of an auto-focus process, an automatic exposure process, and a backlight compensation process, the digital camera including: a blur detection unit configured to detect a trajectory of blur that is a trajectory indicating blur in a search region on the input picture, the search region including the image of the target and being determined using a picture captured temporally before the input picture; and a tracking processing unit configured to track the image of the target by specifying a target region using at least one of end points of the trajectory of blur detected by the blur detection unit, the target region being a region including the image of the target and being smaller than the search region.

With this, even when an amount of characteristics in an image of the target varies on input pictures due to quick movement of the target or other causes, the target can be stably tracked with use of the trajectory of blur.

Furthermore, it may be possible that the digital camera further includes a storage unit configured to store an amount of initial characteristics that quantitatively indicates characteristics of the image of the target, and the blur detection unit is further configured to specify a terminal end point of the detected trajectory of blur, and the tracking processing unit is configured to specify the target region on a subsequent input picture temporally successive to the input picture, by (i) determining, as the search region, a region on the subsequent input picture temporally successive to the input picture which region includes a position corresponding to the terminal end point of the trajectory of blur specified by the blur detection unit, and (ii) searching the determined search region for a region having an amount of characteristics that is closest to the amount of initial characteristics stored in the storage unit.

With this, on an input picture subsequent to a picture in which an image of the target is blurred, an area around a position at which an image of the target presumably appears can be determined as a search region. This makes it possible to stably track the target and reduce the load of the searching process.

Furthermore, it may be possible that the blur detection unit is configured to specify, of the two end points of the trajectory of blur, the end point farther from the position corresponding to the target region specified on a last input picture temporally successive to the input picture, as the terminal end point of the trajectory of blur.

With this, using the last input picture temporally successive to the current input picture, it is possible to accurately specify the position of the terminal end point of the trajectory of blur which position is difficult to be estimated on one picture. The use of the position of the terminal end point of the trajectory of blur thus specified allows for more stable tracking of an image of the target.

Furthermore, it may be possible that the tracking processing unit is configured to specify, as the target region on the input picture, the region having the amount of characteristics that is closest to the amount of initial characteristics stored in the storage unit, from among regions each including a corresponding one of the two end points of the trajectory of blur.

With this, it is possible to specify the target region by comparison between the amount of initial characteristics and the amounts of characteristics of the regions including the respective two end points of the trajectory of blur on the picture in which an image of the target is blurred. It is therefore possible to reduce the processing load as compared to the case of searching the search region.

Furthermore, it may be possible that the tracking processing unit is configured to specify the target region on the input picture by: (i) using the trajectory of blur when a length of the trajectory of blur is above a threshold, and (ii) searching the search region for the region having the amount of characteristics that is closest to the amount of initial characteristics stored in the storage unit, when the length of the trajectory of blur is equal to or below the threshold.

With this, the target region can be specified by using the trajectory of blur only when an image of the target is blurred and its amount of characteristics varies, which allows for more stable tracking of the target.

Furthermore, it may be possible that the blur detection unit is further configured to specify a terminal end point of the detected trajectory of blur, and the tracking processing unit is configured to specify, as the target region on the input picture, a region including a position corresponding to the terminal end point of the trajectory of blur specified by the blur detection unit.

With this, on the picture in which an image of the target is blurred, a region including the position of the terminal end point of the trajectory of blur is specified as the target region by using the terminal end point of the trajectory of blur, which makes it possible to easily specify the target region without extracting or comparing the amount of characteristics.

Furthermore, it may be possible that the blur detection unit is configured to specify, of the two end points of the trajectory of blur, the end point farther from the position corresponding to the target region specified on a last input picture temporally successive to the input picture, as the terminal end point of the trajectory of blur.

With this, the position of the terminal end point of the trajectory of blur which is difficult to be estimated on one picture can be specified using the last input picture temporally successive to the current input picture, which allows for more stable tracking of the target.

Furthermore, it may be possible that the digital camera further includes a storage unit configured to store an amount of initial characteristics that quantitatively indicates characteristics in a region including an image of the target, wherein the blur detection unit is configured to detect the trajectory of blur when a shutter speed or frame rate in capturing the input picture is lower than a threshold, and the tracking processing unit is configured to (i) specify, as the target region on the input picture, the region including the position corresponding to the terminal end point of the trajectory of blur specified by the blur detection unit, when the shutter speed or frame rate in capturing the input picture is lower than the threshold, and (ii) determine, as the search region, a region on a subsequent input picture temporally successive to the input picture which region includes a position corresponding to the specified target region, and search the determined region for a region having an amount of characteristics that is closest to the amount of initial characteristics stored in the storage unit, to specify the target region on the input picture, when the shutter speed or frame rate in capturing the input picture is equal to or higher than the threshold.

With this, whether or not the trajectory of blur is used can be selected according to the shutter speed or the frame rate, which allows for a reduction in the load of processing of detecting the trajectory of blur.

Furthermore, an image processing apparatus according to an aspect of the present invention is an image processing apparatus which tracks an image of a target on an input picture, the image processing apparatus including a blur detection unit configured to detect a trajectory of blur that is a trajectory indicating blur in a search region on the input picture, the search region including the image of the target and being determined using a picture captured temporally before the input picture; and a tracking processing unit configured to track the image of the target by specifying a target region using at least one of end points of the trajectory of blur detected by the blur detection unit, the target region being a region including the image of the target and being smaller than the search region.

Furthermore, an integrated circuit according to an aspect of the present invention is an integrated circuit which tracks an image of a target on an input picture, the image processing apparatus including a blur detection unit configured to detect a trajectory of blur that is a trajectory indicating blur in a search region on the input picture, the search region including the image of the target and being determined using a picture captured temporally before the input picture; and a tracking processing unit configured to track the image of the target by specifying a target region using at least one of end points of the trajectory of blur detected by the blur detection unit, the target region being a region including the image of the target and being smaller than the search region.

It is to be noted that the present invention may be implemented not only as the above image processing apparatus but also as an image processing method including steps of operations of characteristic components of the above image processing apparatus. Moreover, the present invention may be implemented as a program which causes a computer to execute the steps included in such an image processing method. Such a program may be distributed via a recording medium such as a CD-ROM or a transmission medium such as the Internet.

[Solution to Problem]

As is clear from the above description, the digital camera or the like according to an aspect of the present invention is capable of stably tracking the target by using the trajectory of blur even when the amount of characteristics of an image of the target varies upon input pictures due to an abrupt movement of the target or other causes.

[Brief Description of Drawings]

[Fig. 1]

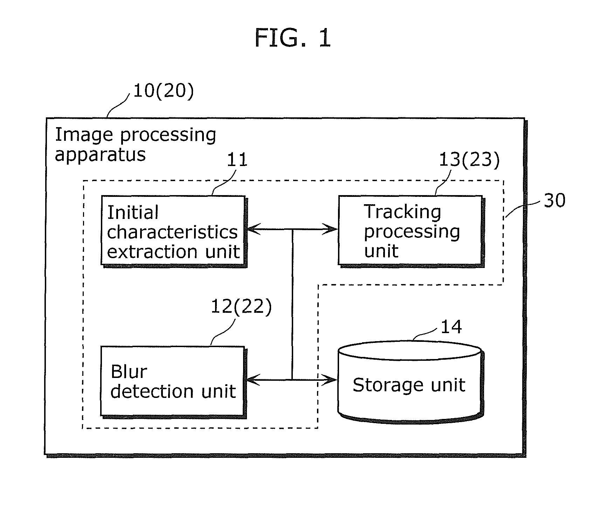

FIG. 1 is a block diagram showing a structure of functions of an image processing apparatus according to the first or second embodiment of the present invention.
[Fig. 2]

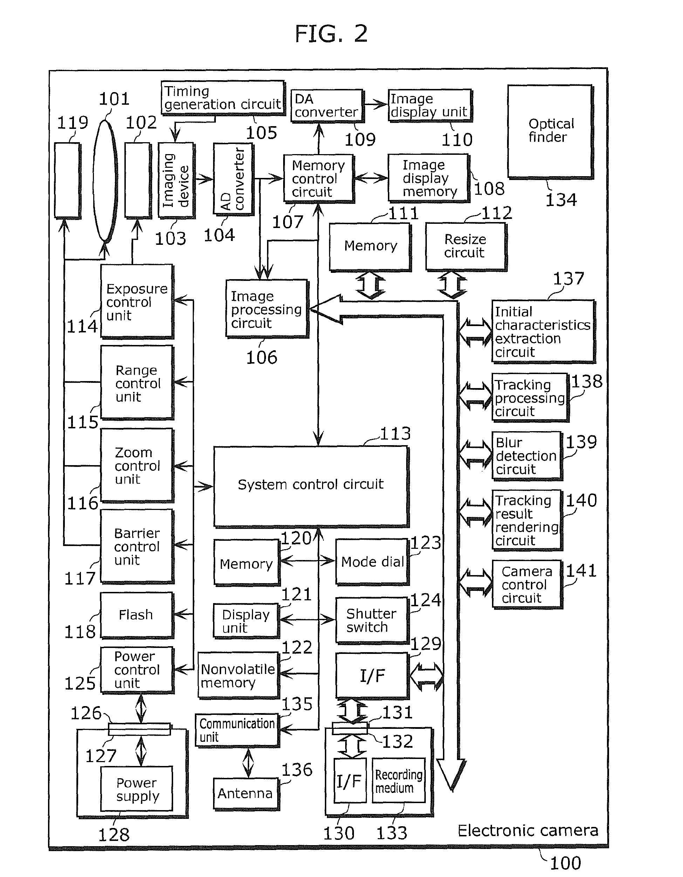

FIG. 2 is a block diagram showing a structure of a digital camera as a specific example of the image processing apparatus according to the first embodiment of the present invention.
[Fig. 3]

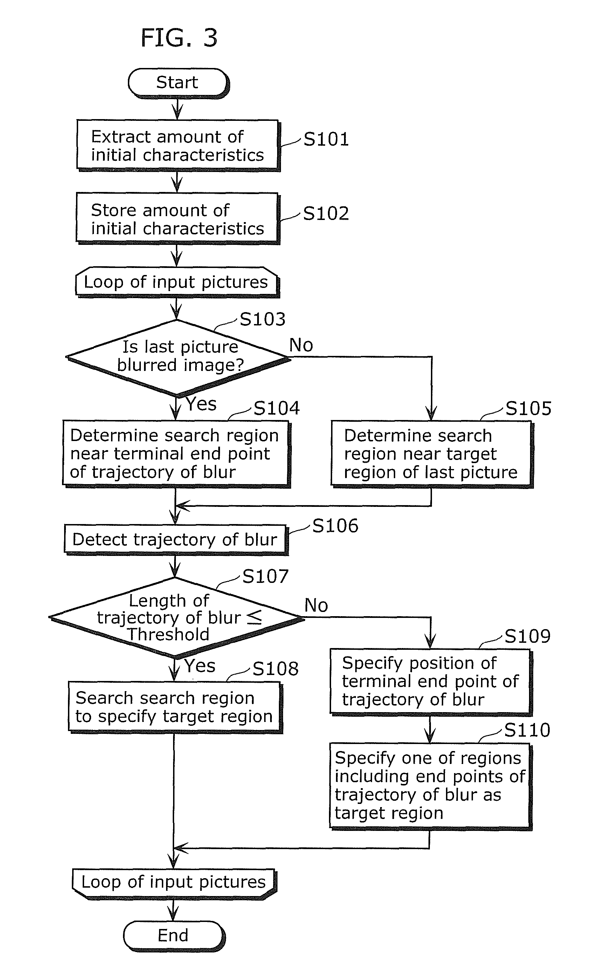

FIG. 3 is a flowchart showing an operation of the image processing apparatus according to the first embodiment of the present invention.
[Fig. 4]

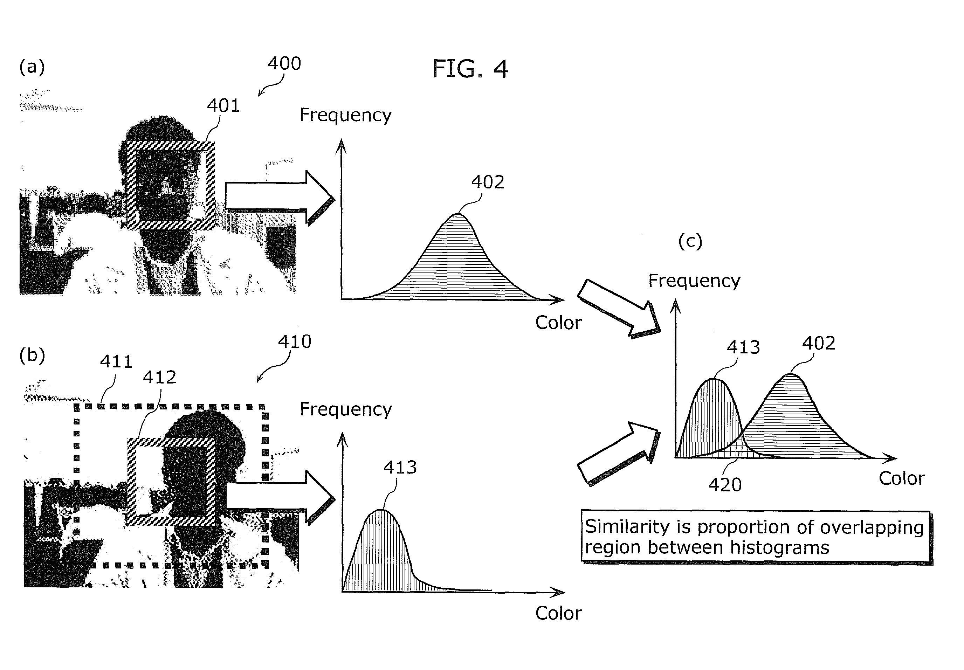

FIG. 4 explains a specific example of various operations in an image processing apparatus for the case where input pictures include no blurred pictures.
[Fig. 5]

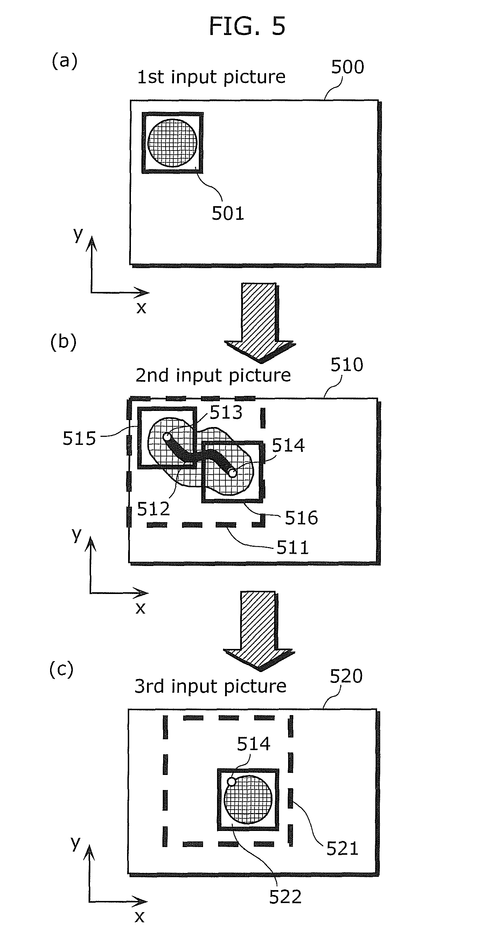

FIG. 5 explains a specific example of an operation in the image processing apparatus according to the first embodiment of the present invention.
[Fig. 6]

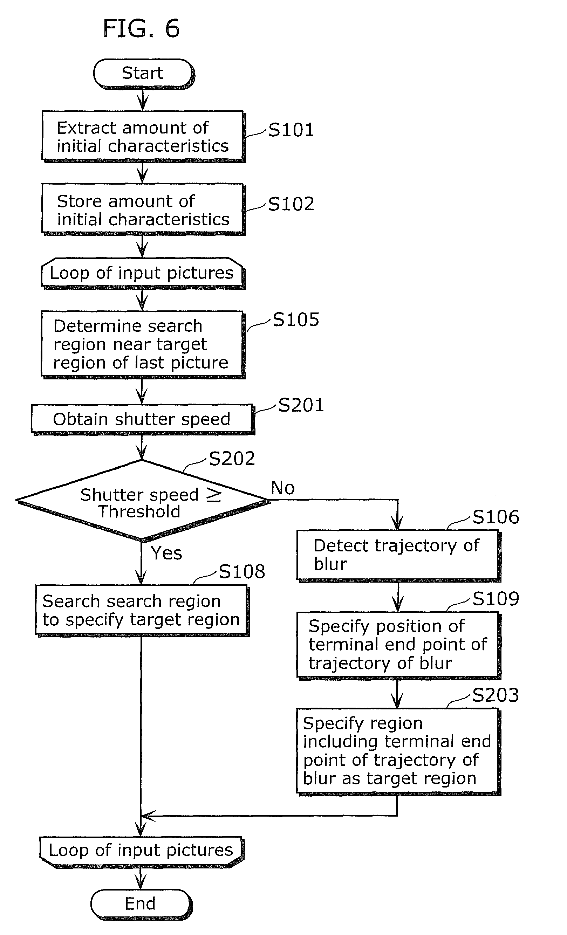

FIG. 6 is a flowchart showing an operation of the image processing apparatus according to the second embodiment of the present invention.

[Description of Embodiments]

Embodiments of the present invention are described below with reference to the drawings.

(First embodiment)

The image processing apparatus according to the first embodiment of the present invention is characterized in determining, by using a terminal end point of a trajectory of blur, a position of a search region on a subsequent input picture which is temporally successive to a blurred picture, when the length of the trajectory of blur is larger than a threshold.

FIG. 1 is a block diagram showing a structure of functions of an image processing apparatus according to the first embodiment of the present invention. As shown in FIG. 1, an image processing apparatus 10 includes an initial characteristics extraction unit 11, a blur detection unit 12, a tracking processing unit 13, and a storage unit 14.

The initial characteristics extraction unit 11 obtains information (position, shape, size, etc.) about an initial region on an input picture which region includes an image of a target in which the image of the target is specified. The initial characteristics extraction unit 11 extracts an amount of initial characteristics that quantitatively indicates characteristics of the image of the target included in the initial region. Furthermore, the initial characteristics extraction unit 11 writes the extracted amount of initial characteristics into the storage unit 14.

The blur detection unit 12 detects a trajectory of blur in the search region on the input picture. The search region is a region including an image of the target, which region is determined by the tracking processing unit 13 using an image captured temporally before the input picture. Furthermore, the blur detection unit 12 specifies a terminal end point of the detected trajectory of blur. Specifically, of the two end points of the trajectory of blur, the end point farther from the position corresponding to a target region specified on the last input picture temporally successive to the current input picture is specified as the terminal end point of the trajectory of blur.

The tracking processing unit 13 specifies the target region using the end point of the trajectory of blur detected by the blur detection unit 12. The target region is a region including an image of the target, which region is smaller than the search region. In the case where the length of the trajectory of blur detected by the blur detection unit 12 is larger than the threshold, the tracking processing unit 13 determines the input picture as a blurred picture and specifies a target region using the end point of the trajectory of blur.

Specifically, the tracking processing unit 13 specifies, as the target region on the input picture, a region having the amount of characteristics that is closest to the amount of initial characteristics stored in the storage unit 14, from among the regions which include the respective two end points of the trajectory of blur.

Furthermore, the tracking processing unit 13 determines, as the search region, a region including the position corresponding to the terminal end point of the trajectory of blur specified by the blur detection unit 12, in a subsequent input picture temporally successive to the input picture in which the trajectory of blur has been detected. When the subsequent input picture temporally successive to the input picture in which the trajectory of blur has been detected is not a blurred picture, the tracking processing unit 13 searches the determined search region for a region having the amount of characteristics that is closest to the amount of initial characteristics stored in the storage unit 14. The region thus searched for is specified by the tracking processing unit 13 as the target region.

The storage unit 14 stores the amount of initial characteristics extracted by the initial characteristics extraction unit 11. In addition, the storage unit 14 stores information (hereinafter referred to simply as "blur end-point information") indicating the position of the terminal end point of the trajectory of blur specified by the blur detection unit 12. Furthermore, the storage unit 14 stores information (hereinafter referred to simply as "target region information") indicating the position and size of the target region specified by the tracking processing unit 13.

FIG. 2 is a block diagram showing a structure of a digital camera as a specific example of the image processing apparatus according to the first embodiment of the present invention. As shown in FIG. 2, a digital camera 100 includes an imaging lens 101, a shutter 102, an imaging device 103, an AD converter 104, a timing generation circuit 105, an image processing circuit 106, a memory control circuit 107, an image display memory 108, a DA converter 109, an image display unit 110, a memory 111, a resize circuit 112, a system control circuit 113, an exposure control unit 114, a range control unit 115, a zoom control unit 116, a barrier control unit 117, a flash 118, a protector 119, a memory 120, a display unit 121, a nonvolatile memory 122, a mode dial switch 123, a shutter switch 124, a power control unit 125, connectors 126 and 127, a power supply 128, interfaces 129 and 130, connectors 131 and 132, a recording medium 133, an optical finder 134, a communication unit 135, an antenna 136, an initial characteristics extraction circuit 137, a tracking processing circuit 138, a blur detection circuit 139, a tracking result rendering circuit 140 and a camera control circuit 141. The power supply 128 and the recording medium 133 may be detachable.

The imaging lens 101 is a lens capable of zooming and focusing, thus collecting incident light on the imaging device 103 so as to form an image thereon.

The shutter 102 is capable of stopping down, thus regulating an amount of light incident on the imaging device 103.

The imaging device 103 transforms an optical image formed by the incident light, into electrical signals (image data).

The AD converter 104 converts analog signals provided from the imaging device 103, to digital signals. The AD converter 104 writes the image data converted to the digital signals, in the image display memory 108 or the memory 111 via the memory control circuit 107. Alternatively, the AD converter 104 outputs the image data converted to the digital signals, to the image processing circuit 106.

The timing generation circuit 105 provides a clock signal or a control signal to the imaging device 103, the AD converter 104, and the DA converter 109. The timing generation circuit 105 is controlled by the memory control circuit 107 and the system control circuit 113.

The image processing circuit 106 performs a predetermined image interpolation process, color conversion process, or the like on the image data provided from the AD converter 104 or the image data provided from the memory control circuit 107. The image processing circuit 106 performs a predetermined arithmetic operation using the input picture data, and on the basis of the obtained operation result, the system control circuit 113 controls the exposure control unit 114 and the range control unit 115.

The memory control circuit 107 controls the AD converter. 104, the timing generation circuit 105, the image processing circuit 106, the image display memory 108, the DA converter 109, the memory 111, and the resize circuit 112.

The image display memory 108 stores image data for display.

The DA converter 109 receives the image data for display from the image display memory 109 via the memory control circuit 107, and converts the digital signals to analog signals.

The image display unit 110 displays the image data for display converted by the DA converter 109 to the analog signals. Moreover, the image display unit 110 may receive, from a user, information for specifying a region in which an image of the target to be tracked is included (initial region). The image display unit 110 is a display such as a thin film transistor liquid crystal display (TFTLCD) or a touch panel.

The memory 111 stores the image data formed by the AD converter 104 and the image data processed by the image processing circuit 106. Furthermore, the memory 111 stores information necessary for the tracking processing, such as the amount of initial characteristics extracted by the initial characteristics extraction circuit 137. The memory 111 corresponds to the storage unit 14 of FIG. 1.

The resize circuit 112 generates a low resolution picture from the captured picture. It is to be noted that the resize circuit 112 is capable of selecting predetermined resolutions according to application. The resize circuit 112 retrieves the image data stored in the memory 111, performs a resizing process on the retrieved image data, and writes the processed data in the memory 111.

The resize circuit 112 is put to use, for example, when it is desired to record the image data in the recording medium 133 or the like with the different number of pixels (size) from the number of pixels in the imaging device 103. The number of pixels displayable on the image display unit 110 is considerably smaller than the number of pixels in the imaging device 103. The resize circuit 112 is therefore used also for generating the image for display when the data of captured image is to be displayed on the image display unit 110. Likewise, the resize circuit 112 is used also for generating an image (for example, an image having the size of QVGA) to be used in detecting of blur by the blur detection circuit 139.

The system control circuit 113 controls various processing units and various processing circuits in the whole digital camera 100, thereby performing an image capture process. The image capture process includes an exposure process, a development process, and a recording process. The exposure process is processing in which the image data retrieved from the imaging device 103 is written in the memory 111 via the AD converter 104 and the memory control circuit 107. The development process is arithmetic operations in the image processing circuit 106 and the memory control circuit 107. The recording process is processing in which the image data is retrieved from the memory 111 and written in the recording medium 133.

The exposure control unit 114 controls the shutter 102 capable of stopping down. In addition, as working with the flash 118, the exposure control unit 114 has a function of adjusting a flash of light.

The range control unit 115 controls focusing of the imaging lens 101. The zoom control unit 116 controls zooming of the imaging lens 101. The barrier control unit 117 controls the operation of the protector 119.

The flash 118 illuminates a subject with a flash of light. Furthermore, the flash 118 has a function of providing AF auxiliary light and a function of adjusting a flash of light.

The protector 119 is a barrier which covers an imaging unit of the digital camera 100 which unit includes the imaging lens 101, the shutter 102, and the imaging device 103, to protect the imaging unit from dirt and breakage.

The memory 120 records a constant, a variable, a program, and so on for operation of the system control circuit 113.

The display unit 121 is a liquid crystal display device which displays an operation state, a message, or the like using characters, images, or audio according to execution of a program in the system control circuit 113, or alternatively is a speaker or the like. The display unit 121 or the display units 121 are provided at an easily viewable position or positions near an operation unit of the digital camera 100. The display unit 121 is formed by combination of an LCD, light emitting diodes (LED), a sound device, and so on, for example.

The nonvolatile memory 122 is a memory capable of electric erasing and recording, and stores operation setting data of the digital camera 100, user-specific information, or the like. The nonvolatile memory 122 is an electrically erasable and programmable read only memory (EEPROM), for example.

The mode dial switch 123 is capable of setting a function mode by switching between various modes such as an automatic shooting mode, a shooting mode, a panorama shooting mode, and an RAW mode.

The shutter switch 124 turns on in the course of operation of a shutter button (not shown) and thereby instructs the start of operations such as the AF processing, the AE processing, and the auto white balance (AWB) processing. Furthermore, the shutter switch 124 instructs the start of operations in a series of processing including the exposure process, the development process, and the recording process.

The power control unit 125 includes a battery detection circuit, a DC-DC converter, and a switch circuit for switching a block between conducting and non-conducting states. The power control unit 125 detects whether or not a battery is mounted, of what type the battery is, and how much the battery is left. Furthermore, on the basis of the detection result and the instruction given by the system control circuit 113, the power control unit 125 controls the DC-DC converter so that necessary voltage is fed back to provide voltage to the various processing units including the recording medium 133 via the connectors 126 and 127.

The connectors 126 and 127 are connectors for establishing connection between the power control unit 125 and the power supply 128.

The power supply 128 is a primary battery such as an alkaline battery or a lithium battery, a secondary battery such as a NiCd battery, a NiMH battery or a Li battery, or an AC adapter.

The interfaces 129 and 130 are interfaces for transmission of the image data and so on between the recording medium 133 and the memory 111 or the like.

The connectors 131 and 132 are connectors for establishing connection to the recording medium 133 via the interface 129 and the interface 130.

The recording medium 133 is a recording medium such as a memory card or hard disk for recording the image data.

The optical finder 134 is a finder through which a photographer checks the subject. It is possible that a photographer takes an image by using only the optical finder 134 without using the electronic finder function of the image display unit 110.

The communication unit 135 has various communication functions such as RS232C, USB, IEEE1394, modem, LAN, or radio communication.

The antenna 136 is a connector which connects the digital camera 100 with another device using the communication unit 135, or is an antenna in the radio communication.

The initial characteristics extraction circuit 137 extracts an amount of initial characteristics from the image data stored in the memory 111, and writes the extracted amount of initial characteristics in the memory 111. Coordinates of the region from which the amount of initial characteristics is extracted are specified with reference to the position on the touch panel at which a user inputs, the AF region set by a user pressing the shutter switch 124, or the like. The initial characteristics extraction circuit 137 corresponds to the initial characteristics extraction unit 11 of FIG. 1.

The tracking processing unit 138 retrieves the amount of initial characteristics from the memory 111, and performs a tracking process using the retrieved amount of initial characteristics. The tracking processing circuit 138 then writes a tracking result (such as coordinate data and evaluation values) in the memory 111. The tracking processing circuit 138 corresponds to the tracking processing unit 13 of FIG. 1.

The blur detection circuit 139 detects a trajectory of blur, and writes, in the memory 111, a detection result (a length of time from opening to closing of the shutter, and values of the X coordinate and the Y coordinate of the image of a subject moving in the above period of time). The blur detection circuit 139 corresponds to the blur detection unit 12 of FIG. 1

The tracking result rendering circuit 140 processes the image data for display written in the image display memory 108, in order to display on the display unit 121 the tracking result written in the memory 111. Specifically, the tracking result rendering circuit 140 performs, on the image data, processing such as tracking frame or mosaic rendering, changing of characters and colors for display, and feathering.

The camera control circuit 141 controls the AF processing, based on the position and size of the tracking result (target region) written in the memory 111, so that an image of the target included in the target region is in focus. Specifically, for example, the camera control circuit 141 controls the imaging lens 101 so as to increase the contrast by using the contrast of the image of the target included in the target region.

Furthermore, the camera control circuit 141 may control the AE processing or the backlight compensation process so that the exposure of the target included in the target region is appropriate. Specifically, for example, the camera control circuit 141 may control, via the exposure control unit 114, a shutter speed and an aperture of the shutter 102 capable of stopping down, according to the mode including a shutter-speed priority mode or an aperture priority mode.

In addition, the camera control circuit 141 may control the digital camera 100 so that the target is at a predetermined position or has a predetermined size in the picture (for example, so that an image of the target, e.g., a face, is located in the center of the picture, or that the whole of the target, e.g., an entire body of a person, is included).

It is to be noted that, in the case where any one of the initial characteristics extraction circuit 137, the tracking processing circuit 138, the blur detection circuit 139, the tracking result rendering circuit 140, and the camera control circuit 141 is absent, the system control circuit 113 may perform the tracking process and so on in software processing.

Next, various operations in the image processing apparatus configured as above are described.

FIG. 3 is a flowchart showing an operation of the image processing apparatus according to the first embodiment of the present invention.

First, the initial characteristics extraction unit 11 obtains information of the initial region that includes an image of a target on an input picture in which the image of the target is specified, and extracts, using the obtained initial region, an amount of initial characteristics that quantitatively indicates characteristics of the image of the target (Step S101).

The initial characteristics extraction unit 11 then stores, in the storage unit 14, the extracted amount of initial characteristics and information indicating the position and size of the initial region (Step S102).

After that, the image processing apparatus 10 repeats the processing of specifying the target region that includes an image of the target in an input picture following and after the input picture from which the amount of initial characteristics has been extracted. The processing of specifying the target region is as follows.

First, the tracking processing unit 13 determines whether or not the last input picture temporally successive to the current picture is a blurred picture (Step S103). Specifically, the tracking processing unit 13 determines whether or not flag information indicating whether or not the last input picture temporally successive to the current picture is a blurred picture is "1", for example.

When the last input picture is a blurred picture (Yes in Step S103), the tracking processing unit 13 determines, as the search region, a region near the position corresponding to the terminal end point of the trajectory of blur (Step S104). Specifically, the tracking processing unit 13 determines, as the search region, a region centered on a position indicated in the blur terminal end point information, for example.

When the last input picture is not a blurred picture (No in Step S103), the tracking processing unit 13 determines, as the search region, a region near the target region specified on the last input picture (Step S105). Specifically, the tracking processing unit 13 retrieves, from the storage unit 14, information indicating the center position and size of the target region specified in the last input picture, for example. The tracking processing unit 13 then determines, as the search region, a region which is centered on the retrieved center position and larger than the retrieved target region. However, the center position of the search region is not necessarily the same as the retrieved center position when the retrieved center position is located at the end of the input picture, for example.

Next, the blur detection unit 12 detects a trajectory of blur in the search region determined by the tracking processing unit 13 (Step S106). Because blur may depend on movement of the target, it is difficult to determine a trajectory of such blur with use of sensor information from a gyro sensor or acceleration sensor mounted on a camera or the like. The blur detection unit 12 therefore detects a trajectory of blur with use of only the information of one input picture. Specifically, the blur detection unit 12 detects, as the trajectory of blur, a point spread function (PSF) calculated using pixel values of pixels included in the search region, for example (refer to Non-Patent Literature 1 "High-Quality Motion Deblurring From a Single Image (Qi Shen et. al, SIGGRAPH2008)", for example).

In the case where the blur detection unit 12 detects a trajectory of blur according to the method disclosed by the Non-Patent Literature 1, the storage unit 14 previously stores distribution of image gradients appearing on a general natural image having no blur. The blur detection unit 12 repeats comparison between the distribution of image gradients stored in the storage unit 14 and the distribution of image gradients in an image having a search region corrected using a predetermined point spread function, thereby searching for a point spread function with which these distributions of image gradients are the same or similar. The point spread function thus searched for is detected by the blur detection unit 12 as the trajectory of blur.

Next, the blur detection unit 12 determines whether or not the length of the detected trajectory of blur is equal to or below a threshold (Step S107). In other words, the blur detection unit 12 determines whether or not the input picture is a blurred picture. The threshold is a predetermined value, for example.

When the length of the trajectory of blur is equal to or below the threshold (Yes in Step S107), the tracking processing unit 13 searches for a region having the amount of characteristics that is closest to the amount of characteristics of the initial region stored in the storage unit 14. As a result of the searching, the tracking processing unit 13 specifies, as the target region, the region having the closest amount of characteristics (Step S108). That is, when the input picture is not a blurred picture, the image processing apparatus 10 specifies the target region without using the trajectory of blur. Furthermore, the tracking processing unit 13 stores the target region information in the storage unit 14 and sets "0" in the flag information indicating whether or not the input picture is a blurred picture.

On the other hand, when the length of the trajectory of blur is larger than the threshold (No in Step S107), the blur detection unit 12 specifies, as the terminal end point, one of the two end points of the trajectory of blur which end point is farther from the position corresponding to the target region specified on the last input picture temporally successive to the current input picture. Subsequently, the tracking processing unit 12 stores the blur terminal end point information in the storage unit 14, and sets "1" in the flag information indicating whether or not the input picture is a blurred picture.

Furthermore, the tracking processing unit 13 compares the amount of initial characteristics stored in the storage unit 14 with the amounts of characteristics of the regions including the respective two end points of the trajectory of blur. As a result of the comparison, one of the regions having the similar amount of characteristics is specified as the target region in the input picture (Step S110).

The image processing apparatus 10 is capable of tracking images of the target by repeating, for each of the input pictures continuously captured, the above processing from Step S103 to Step S110.

Next, specific examples of various operations in the image processing apparatus 10 using a color histogram as the amount of characteristics are described.

First, operations of the image processing unit 10 for the case where input pictures include no blurred pictures are described. In other words, the following describes the operations for the case where the length of a trajectory of blur is equal to or below the threshold in Step S107 of FIG. 3.

FIG. 4 explains a specific example of various operations in the image processing apparatus for the case where input pictures include no blur pictures. First, as shown in FIG. 4(a), the initial characteristics extraction unit 11 obtains an initial region 401 that is a region including an image of a target on an input picture 400 in which the target is specified. The initial characteristics extraction unit 11 then generates an initial color histogram 402 that is a color histogram of the obtained initial region 401. Furthermore, the initial characteristics extraction unit 11 stores the length of a side and the coordinates of the center position of the initial region 401 and the initial color histogram 402 in the storage unit 14.

The color histogram is information indicating the distribution of frequencies of colors in pixels included in an image or a part of an image. For example, the horizontal axis of the color histogram represents 20 color sections of hue (H) values (0 to 360) in the color space of hue, saturation, and value (HSV). The horizontal axis of the color histogram represents the number (frequency) of pixels included in each of the sections. A color section to which each of the pixels belongs may be determined by the integer portion of a value obtained by dividing the hue (H) value of each pixel by the number of sections.

The number of sections is not necessarily 20 and may be any number as long as it is no less than 1. However, it is preferable that the number of sections be larger as the number of colors included in the initial region is larger. This allows for improved accuracy in specifying the target region because a similar region can be searched for using the frequency for each of small sections when the initial region includes a large number of colors. On the other hand, when the initial region includes a small number of colors, the frequency for each of large sections is stored, which allows for a smaller memory usage.

Next, as shown in FIG. 4(b), the tracking processing unit 13 determines a search region 411 in a next input picture 410 temporally successive to the input picture 400. Specifically, the tracking processing unit 13 determines, as the search region 411, a rectangular region which includes the target region (in this case, the initial region 401) in the input picture 400 and is larger than the target region (in this case, the initial region 401), because the temporally last input picture 400 is not a blurred picture. More specifically, the tracking processing unit 13 retrieves the length of a side and the coordinates of the center position of the initial region 401 stored in the storage unit 14. The tracking processing unit 13 then determines, as the search region, a rectangular region which has a side larger than the retrieved length of a side and is centered on the coordinates of the retrieved center position.

The shape of the search region is not necessarily rectangular and may be any given shape including a circle and a hexagon. The size of the search region may be determined in advance, or may be larger as the frame rate or the shutter speed is lower.

Subsequently, the tracking processing unit 13 selects, as a selected region 412, a region which is smaller than the search region 411 and included in the search region 411, because the input picture 410 is not a blurred picture. The tracking processing unit 13 then extracts a selected color histogram 413 that is the color histogram of the selected region 412. At this time, the selected color histogram 413 is preferably normalized using the initial color histogram 402. Specifically, the tracking processing unit 13 preferably normalizes the selected color histogram 413 by dividing the frequency of each section in the color histogram of the selected region by the frequency of a corresponding section of the initial color histogram 402.

Subsequently, as shown in FIG. 4(c), the tracking processing unit 13 calculates, as similarity, the proportion of an overlapping part 420 that is an overlap between the initial color histogram 402 and the selected color histogram 413. Specifically, the tracking processing unit 13 calculates the similarity according to (Ex. 1).

[Math 1]

$$S_{RI} = \sum_{i=0}^{dim} Min(R_i, I_i) \quad \cdots (Ex.\ 1)$$

In the above expression, $R_i$ represents the frequency of the "i"-th section in the initial color histogram 402, and $I_i$ represents the frequency of the "i"-th section in the selected color histogram 413. In this case, "i" is a value from 0 to 19 because there are 20 sections. It is to be noted that a higher proportion of the overlapping part 420 indicates higher similarity, and a lower proportion of the overlapping part 420 indicates lower similarity.

The tracking processing unit 13 thus repeats selection of the region 412 and extraction of the selected color histogram 413 while the region 412 is different in position and size in the search region 411, and thereby specifies, as the target region, the selected region 412 which is highest in the proportion of the overlapping part 420 between the color histograms. The tracking processing unit 13 then stores, in the storage unit 14, the length of a side and the coordinates of the center position of the target region.

As above, in the case where the input picture includes no blurred pictures, the image processing apparatus 10 specifies the target region without using a trajectory of blur in each of the input pictures temporally following the input picture 400.

Next, specific examples of various operations in the image processing unit for the case where input pictures include a blurred picture are described with reference to FIG. 5.

FIG. 5 explains a specific example of an operation in the image processing apparatus according to the first embodiment of the present invention. FIG. 5 shows the operation of the image processing apparatus 10 for the case where, of three input pictures (a first input picture 500, a second input picture 510, and a third input picture 520) captured temporally continuously, the second input picture 510 is a blurred picture.

In the first input picture 500 shown in FIG. 5(a), a target region 501 is specified as a region which includes an image of a target to be tracked. This means that the length of a side and the coordinates of the center position of the target region 501 are stored in the storage unit 14.

The image processing apparatus 10 starts the image processing of the second input picture 510.

The tracking processing unit 13 retrieves, from the storage unit 14, the length of a side and the coordinates of the center position of the target region 501 in the first input picture 500 stored in the storage unit 14. As shown in FIG. 5(b), the tracking processing unit 13 then determines, as a search region 511, a rectangular region which includes the retrieved coordinates of the center position and has a side larger than the retrieved length of a side, in the second input picture 510.

Subsequently, the blur detection unit 12 detects a trajectory of blur 512 in the search region 511. In the second input picture 510, on which the image of the target is blurred, the trajectory of blur 512 is detected that is a curve having two end points 513 and 514 as shown in FIG. 5(b).

The length of the trajectory of blur 512 is larger than the threshold. Accordingly, of the end points 513 and 514, the end point 514 farther from the center position of the target region 501 is specified by the bur detection unit 12 as the terminal end point of the blur. That is, the blur detection unit 12 determines that the target moved from the end point 513 to the end point 514. The blur detection unit 12 then stores, in the storage unit 14, the coordinates which correspond to the position of the terminal end point of the blur and are in the second input picture 510, as the blur terminal end point information, and sets "1" in the flag information indicating whether or not the input picture is a blurred picture.

Furthermore, the tracking processing unit 13 extracts the color histograms of regions 515 and 516 including the respective two end points 513 and 514 of the trajectory of blur 512. The tracking processing unit 13 then calculates the similarity between the extracted color histograms and the initial color histogram stored in the storage unit 14. As a result, the tracking processing unit 13 specifies, as the target region in the second input picture 510, the region (for example, the region 515) having the color histogram with a high similarity.

Next, the image processing apparatus 10 starts the image processing of the third input picture 520.

For the flag information having "1", the tracking processing unit 13 determines that the second input picture 510 is a blurred picture. Accordingly, the tracking processing unit 13 retrieves, from the storage unit 14, the coordinates of the terminal end point of the blur in the second input picture 510. The tracking processing unit 13 then determines, as a search region 521, a rectangular region including the retrieved coordinates in the third input picture 520, as shown in FIG. 5(c).

Subsequently, the blur detection unit 12 detects a trajectory of blur in the search region 521. In the third input picture 520, the image of the target is not blurred and the length of the trajectory of blur is thus no more than the threshold. Accordingly, the blur detection unit 12 sets "0" in the flag information. Furthermore, the tracking processing unit 13 searches the search region 521 for a region having the color histogram with the highest proportion of an overlapping part with the initial color histogram. As a result of the search, the tracking processing unit 13 specifies, as a target region 522, the region having the color histogram with the highest proportion of the overlapping part.

As above, when a part of input pictures includes a blurred picture, the image processing unit 10 according to the present embodiment determines the search region using the terminal end point of the trajectory of blur in the input picture following to the input picture including the blur. As a result, the image processing apparatus 10 is capable of narrowing down the search region to a region centered on a position with a high probability that an image of the target appears, thereby allowing for stable tracking of an image of the target as well as allowing for a reduction in the load of the searching process. Especially, when the amount of characteristics of the image of the target changes due to a blur caused by an abrupt movement of the target, a sudden and intense movement of the digital camera by a user, and so on, the image processing apparatus 10 is capable of stably tracking an image of the target in the input picture captured after the blurred picture.

Moreover, using the last picture temporally successive to the current picture, the image processing apparatus 10 is capable of accurately specifying the position of the terminal end point of the trajectory of blur which is difficult to be estimated on one picture. The use of the position of the terminal end point of the trajectory of blur thus specified allows the image processing apparatus 10 to stably track the target.

Furthermore, the image processing apparatus 10 is capable of specifying the target region by comparison between the amount of initial characteristics and the amounts of characteristics of the regions including the respective two end points of the trajectory of blur on the blurred picture. This allows the image processing apparatus 10 to reduce the load of the searching process as compared to the case of searching the search region.

In addition, the image processing apparatus 10 specifies the target region by using the trajectory of blur only on a blurred picture. Accordingly, the image processing apparatus 10 is capable of more stably tracking the target.

(Second embodiment)

Next, an image processing apparatus according to the second embodiment of the present invention is described.

An image processing apparatus 20 according to the second embodiment and the image processing apparatus 10 according to the first embodiment are the same except for part of operations of the blur detection unit and the tracking processing unit. The following description therefore refers to FIG. 1 for a block diagram of the same functions and configurations as those in the first embodiment.

The blur detection unit 22 detects the trajectory of blur when the shutter speed or frame rate in capturing images of input pictures is lower than a threshold. The blur detection unit 22 then specifies the terminal end point of the trajectory of blur, as in the case of the blur detection unit 12 in the first embodiment.

The tracking processing unit 23 specifies, as a target region in the input picture, a region including a position corresponding to the terminal end point of the trajectory of blur specified by the blur detection unit 22.

Next, various operations in the image processing apparatus configured as above are described.

FIG. 6 is a flowchart showing an operation of the image processing apparatus according to the second embodiment of the present invention. In FIG. 6, the same processing as that shown in FIG. 3 is denoted by the same numeral and its description is omitted or simplified.

After the search region is determined in Step S105, the blur detection unit 22 obtains a shutter speed or frame rate in capturing images of input pictures (Step S201). The blur detection unit 22 then determines whether or not the obtained shutter or frame rate is equal to or above the threshold (Step S202). The threshold is a predetermined value that is a boundary value of the shutter speed or frame rate beyond which the probability of occurrence of blur in an image of the target generally increases.

When the shutter speed or frame rate is equal to or above the threshold (Yes in Step S202), the tracking processing unit 23 searches the search region determined in Step S105, for a region having the amount of characteristics that is closest to the color histogram of initial region stored in the storage unit 14. As a result of the searching, the tracking processing unit 23 specifies, as the target region, the region having the closest amount of characteristics (Step S108). That is, when the shutter speed or frame rate is high, the probability that the input picture is a blurred picture is low, and the image processing apparatus 20 therefore specifies the target region without detecting the trajectory of blur.

On the other hand, when the shutter speed or frame rate is lower than the threshold (No in Step S202), the blur detection unit 22 detects the trajectory of blur in the search region determined by the tracking processing unit 23 (Step S106). That is, when the shutter speed or frame rate is low, the probability that the input picture is a blurred picture is high, and the image processing apparatus 20 therefore detects the trajectory of blur.

Subsequently, the blur detection unit 22 specifies, as the terminal end point of the trajectory of blur, one of the two end points of the trajectory of blur which end point is farther from the position corresponding to the target region specified on the last picture temporally successive to the current picture (Step S109).

The tracking processing unit 23 then specifies, as the target region, the region including the position corresponding to the terminal end point of the trajectory blur specified by the blur detection unit 22 (Step S203).

As above, when input pictures include a blurred picture, the image processing unit 20 according to the present embodiment specifies the region including the position of the terminal end point of the trajectory of blur on the blurred picture. This allows the image processing apparatus 20 to easily specify the target region without extracting or comparing the amount of characteristics. Especially, when the input pictures include many blurred pictures because they have been taken in a dark environment where it is dark around the target, the image processing unit 20 is capable of stably tracking the target on such blurred pictures.

The image processing apparatus 20 specifies, as the target region, a region including a position corresponding to the terminal end point of the trajectory of blur when the shutter speed or the frame rate is low. That is, whether or not the trajectory of blur is used can be selected according to the shutter speed or the frame rate, with the result that the load of processing of detecting the trajectory of blur can be reduced.

While the image processing apparatus of the digital camera according to an implementation of the present invention has been described with reference to embodiments thereof, the present invention is not limited to these embodiments. The scope of the present invention includes various variation of the embodiments which will occur to those skilled in the art, and other embodiments in which element of different embodiments are combined, without departing from the basic principles of the present invention.

For example, while the blur detection unit detects a trajectory of blur by calculating a point spread function in the search region on the input picture in the above embodiments, the trajectory of blur may be detected in other methods. For example, the blur detection unit may calculate a trajectory of blur using a plurality of pictures of the same subject captured at the same time as the input picture with a higher shutter speed or frame rate than the input picture. When the trajectory of blur is calculated in this manner, the direction of the trajectory of blur is calculated together with the trajectory of blur, with the result that the image processing apparatus or the digital camera is capable of easily specifying the terminal end point of the trajectory of blur.

Furthermore, while the initial characteristics extraction unit or the tracking processing unit extracts the color histogram as the amount of characteristics that quantitatively indicates characteristics in a region of the input picture in the above embodiments, a luminance histogram may be extracted as the amount of characteristics. In this case, the tracking processing unit calculates the similarity by comparing a luminance histogram derived from the initial region and a luminance histogram derived from the selected region. The initial characteristics extraction unit or the tracking processing unit may extract the luminance itself as the amount of characteristics and search for a similar region through template matching using the extracted luminance.

Furthermore, part or all of the elements included in the above image processing apparatus may be provided in one system LSI (large scale integration). The system LSI is a super multifunctional LSI manufactured by integrating plural components into one chip and is specifically a computer system which includes a microprocessor, a read only memory (ROM), a random access memory (RAM) and so on. For example, as shown in FIG. 1, the initial characteristics extraction unit 11, the blur detection unit 12 or 22, and the tracking processing unit 13 or 23 may be provided by one system LSI 30.

Furthermore, the present invention may be implemented not only as the above image processing apparatus but also as a digital camera including characteristic components of the above image processing apparatus as shown in FIG. 2. Moreover, the present invention may be implemented as an image processing method including steps of operations of the characteristic components of the above image processing apparatus. Moreover, the present invention may be implemented as a program which causes a computer to execute the steps included in such an image processing method. Such a program may be distributed via a recording medium such as a CD-ROM or a transmission medium such as the Internet.

[Industrial Applicability]

The digital camera or imaging apparatus according to an aspect of the present invention is useful for a digital video camera, a digital still camera, a security camera, a vehicle-mounted camera, a mobile phone with a camera function, or the like which specifies a region including an image of the target to be tracked and thereby tracks the image of the target.

[Reference Signs List]

| | |
|---|---|
| 10, 20 | Image processing apparatus |
| 11 | Initial characteristics extraction unit |
| 12, 22 | Blur detection unit |
| 13, 23 | Tracking processing unit |
| 14 | Storage unit |
| 30 | System LSI |
| 100 | Digital camera |
| 101 | Imaging lens |
| 102 | Shutter |
| 103 | Imaging device |
| 104 | AD converter |
| 105 | Timing generation circuit |
| 106 | Image processing circuit |
| 107 | Memory control circuit |
| 108 | Image display memory |
| 109 | DA converter |
| 110 | Image display unit |

| | |
|---|---|
| 111, | 120 Memory |
| 112 | Resize circuit |
| 113 | System control circuit |
| 114 | Exposure control unit |
| 115 | Range control unit |
| 116 | Zoom control unit |
| 117 | Barrier control unit |
| 118 | Flash |
| 119 | Protector |
| 121 | Display unit |
| 122 | Nonvolatile memory |
| 123 | Mode dial switch |
| 124 | Shutter switch |
| 125 | Power control unit |
| 126, 127, 131, 132 | Connector |
| 128 | Power supply |
| 129, 130 | Interface |
| 133 | Recording medium |
| 134 | Optical finder |
| 135 | Communication unit |
| 136 | Antenna |
| 137 | Initial characteristics extraction circuit |
| 138 | Tracking processing circuit |
| 139 | Blur detection circuit |
| 140 | Tracking result rendering circuit |
| 141 | Camera control circuit |
| 400, 410 | Input picture |
| 401 | Initial region |
| 402 | Initial color histogram |
| 411, 511, 521 | Search region |
| 412 | Selected region |
| 413 | Selected color histogram |
| 420 | Overlapping part |
| 500 | First input picture |
| 501, | 522 Target region |
| 510 | Second input picture |
| 512 | Trajectory of blur |
| 513, 514 | End point |
| 515, 516 | Region |
| 520 | Third input picture |

**Claims**

1.  A digital camera which tracks an image of a target on an input picture and executes, using a result of the tracking, at least one of an auto-focus process, an automatic exposure process, and a backlight compensation process, said digital camera comprising:

    a blur detection unit configured to detect a trajectory of blur that is a trajectory indicating blur in a search region on the input picture, the search region including the image of the target and being determined using a picture captured temporally before the input picture; and
    a tracking processing unit configured to track the image of the target by specifying a target region using at least one of end points of the trajectory of blur detected by said blur detection unit, the target region being a region including the image of the target and being smaller than the search region.

2.  The digital camera according to Claim 1, further comprising
    a storage unit configured to store an amount of initial characteristics that quantitatively indicates characteristics of the image of the target,

wherein said blur detection unit is further configured to specify a terminal end point of the detected trajectory of blur, and

said tracking processing unit is configured to specify the target region on a subsequent input picture temporally successive to the input picture, by (i) determining, as the search region, a region on the subsequent input picture temporally successive to the input picture which region includes a position corresponding to the terminal end point of the trajectory of blur specified by said blur detection unit, and (ii) searching the determined search region for a region having an amount of characteristics that is closest to the amount of initial characteristics stored in said storage unit.

**3.** The digital camera according to Claim 2,
wherein said blur detection unit is configured to specify, of the two end points of the trajectory of blur, the end point farther from the position corresponding to the target region specified on a last input picture temporally successive to the input picture, as the terminal end point of the trajectory of blur.

**4.** The digital camera according to Claim 2,
wherein said tracking processing unit is configured to specify, as the target region on the input picture, the region having the amount of characteristics that is closest to the amount of initial characteristics stored in said storage unit, from among regions each including a corresponding one of the two end points of the trajectory of blur.

**5.** The digital camera according to Claim 2,
wherein said tracking processing unit is configured to specify the target region on the input picture by: (i) using the trajectory of blur when a length of the trajectory of blur is above a threshold, and (ii) searching the search region for the region having the amount of characteristics that is closest to the amount of initial characteristics stored in said storage unit, when the length of the trajectory of blur is equal to or below the threshold.

**6.** The digital camera according to Claim 1,
wherein said blur detection unit is further configured to specify a terminal end point of the detected trajectory of blur, and

said tracking processing unit is configured to specify, as the target region on the input picture, a region including a position corresponding to the terminal end point of the trajectory of blur specified by said blur detection unit.

**7.** The digital camera according to Claim 6,
wherein said blur detection unit is configured to specify, of the two end points of the trajectory of blur, the end point farther from the position corresponding to the target region specified on a last input picture temporally successive to the input picture, as the terminal end point of the trajectory of blur.

**8.** The digital camera according to Claim 6, further comprising
a storage unit configured to store an amount of initial characteristics that quantitatively indicates characteristics in a region including an image of the target,
wherein said blur detection unit is configured to detect the trajectory of blur when a shutter speed or frame rate in capturing the input picture is lower than a threshold, and
said tracking processing unit is configured to (i) specify, as the target region on the input picture, the region including the position corresponding to the terminal end point of the trajectory of blur specified by said blur detection unit, when the shutter speed or frame rate in capturing the input picture is lower than the threshold, and (ii) determine, as the search region, a region on a subsequent input picture temporally successive to the input picture which region includes a position corresponding to the specified target region, and search the determined region for a region having an amount of characteristics that is closest to the amount of initial characteristics stored in said storage unit, to specify the target region on the input picture, when the shutter speed or frame rate in capturing the input picture is equal to or higher than the threshold.

**9.** An image processing apparatus which tracks an image of a target on an input picture, said image processing apparatus comprising:

a blur detection unit configured to detect a trajectory of blur that is a trajectory indicating blur in a search region on the input picture, the search region including the image of the target and being determined using a picture captured temporally before the input picture; and
a tracking processing unit configured to track the image of the target by specifying a target region using at least one of end points of the trajectory of blur detected by said blur detection unit, the target region being a region including the image of the target and being smaller than the search region.

10. An image processing method of tracking an image of a target on an input picture, said image processing method comprising:

detecting a trajectory of blur that is a trajectory indicating blur in a search region on the input picture, the search region including the image of the target and being determined using a picture captured temporally before the input picture; and

tracking the image of the target by specifying a target region using at least one of end points of the trajectory of blur detected in said detecting, the target region being a region including the image of the target and being smaller than the search region.

11. An integrated circuit which tracks an image of a target on an input picture, said integrated circuit comprising:

a blur detection unit configured to detect a trajectory of blur that is a trajectory indicating blur in a search region on the input picture, the search region including the image of the target and being determined using a picture captured temporally before the input picture; and

a tracking processing unit configured to track the image of the target by specifying a target region using at least one of end points of the trajectory of blur detected by said blur detection unit, the target region being a region including the image of the target and being smaller than the search region.

12. A program for tracking an image of a target on an input picture, said program causing a computer to execute:

detecting a trajectory of blur that is a trajectory indicating blur in a search region on the input picture, the search region including the image of the target and being determined using a picture captured temporally before the input picture; and

tracking the image of the target by specifying a target region using at least one of end points of the trajectory of blur detected in said detecting, the target region being a region including the image of the target and being smaller than the search region.

FIG. 1

10(20)

Image processing apparatus

11

Initial characteristics extraction unit

13(23)

Tracking processing unit

30

12(22)

Blur detection unit

14

Storage unit

# FIG. 2

## FIG. 3

```
                    ( Start )
                       │
                       ▼
        ┌──────────────────────────┐
        │ Extract amount of        │─ S101
        │ initial characteristics  │
        └──────────────────────────┘
                       │
                       ▼
        ┌──────────────────────────┐
        │ Store amount of          │─ S102
        │ initial characteristics  │
        └──────────────────────────┘
                       │
                       ▼
        ┌──────────────────────────┐
        │ Loop of input pictures   │
        └──────────────────────────┘
                       │
                       ▼  S103
              ◇───────────────◇
              │ Is last picture │   No
              │ blurred image?  │────────────────────┐
              ◇───────────────◇                      │
                       │ Yes  S104                    │  S105
                       ▼                              ▼
        ┌──────────────────────────┐   ┌──────────────────────────┐
        │ Determine search region  │   │ Determine search         │
        │ near terminal end point  │   │ region near target       │
        │ of trajectory of blur    │   │ region of last picture   │
        └──────────────────────────┘   └──────────────────────────┘
                       │                              │
                       ▼◄─────────────────────────────┘
        ┌──────────────────────────┐  S106
        │ Detect trajectory of blur │
        └──────────────────────────┘
                       │
                       ▼  S107
              ◇───────────────◇
              │ Length of       │
              │ trajectory of   │   No
              │ blur ≤ Threshold│──────────────────┐
              ◇───────────────◇                    │  S109
                       │ Yes  S108                  ▼
        ┌──────────────────────────┐   ┌──────────────────────────┐
        │ Search search region     │   │ Specify position of      │
        │ to specify target region │   │ terminal end point of    │
        └──────────────────────────┘   │ trajectory of blur       │
                       │                └──────────────────────────┘
                       │                              │  S110
                       │                              ▼
                       │                ┌──────────────────────────┐
                       │                │ Specify one of regions   │
                       │                │ including end points of  │
                       │                │ trajectory of blur as    │
                       │                │ target region            │
                       │                └──────────────────────────┘
                       │                              │
                       ▼◄─────────────────────────────┘
        ┌──────────────────────────┐
        │ Loop of input pictures   │
        └──────────────────────────┘
                       │
                       ▼
                    ( End )
```

FIG. 4

(a)

400

401

Frequency

402

Color

(b)

410

411    412

Frequency

413

Color

(c)

Frequency

413    402

420

Color

Similarity is proportion of overlapping
region between histograms

EP 2 429 177 A1

# FIG. 5

(a)

1st input picture 500

501

y

x

(b)

2nd input picture 510

513

515

514

512

516

511

y

x

(c)

3rd input picture 520

514

521

522

y

x

# FIG. 6

```
        ┌─────────────┐
        │    Start     │
        └──────┬──────┘
               ↓
   ┌───────────────────────┐
   │ Extract amount of     │ ──S101
   │ initial characteristics│
   └───────────┬───────────┘
               ↓
   ┌───────────────────────┐
   │ Store amount of       │ ──S102
   │ initial characteristics│
   └───────────┬───────────┘
               ↓
   ┌───────────────────────┐
   │ Loop of input pictures │
   └───────────┬───────────┘
               ↓
   ┌───────────────────────┐
   │ Determine search      │ ──S105
   │ region near target    │
   │ region of last picture │
   └───────────┬───────────┘
               ↓
   ┌───────────────────────┐
   │ Obtain shutter speed  │ ──S201
   └───────────┬───────────┘
               ↓
          ╱─────────╲  ──S202
         ╱ Shutter speed ≥ ╲      No
        ╱   Threshold      ╲──────────────┐
         ╲               ╱                 ↓
          ╲─────────────╱       ┌─────────────────────┐
               │ Yes            │ Detect trajectory of │ ──S106
               ↓                │ blur                 │
   ┌───────────────────────┐   └──────────┬──────────┘
   │ Search search region  │ ──S108        ↓
   │ to specify target region│ ┌─────────────────────┐
   └───────────┬───────────┘   │ Specify position of │ ──S109
               │                │ terminal end point of│
               │                │ trajectory of blur  │
               │                └──────────┬──────────┘
               │                           ↓
               │                ┌─────────────────────┐
               │                │ Specify region      │ ──S203
               │                │ including terminal end│
               │                │ point of trajectory of│
               │                │ blur as target region │
               │                └──────────┬──────────┘
               ↓                           │
   ┌───────────────────────┐◄─────────────┘
   │ Loop of input pictures │
   └───────────┬───────────┘
               ↓
        ┌─────────────┐
        │     End      │
        └─────────────┘
```

<div align="center">**INTERNATIONAL SEARCH REPORT**</div>

| | International application No. |
|---|---|
| | PCT/JP2010/002916 |

| A. CLASSIFICATION OF SUBJECT MATTER |
|---|
| *H04N5/232*(2006.01)i, *H04N5/225*(2006.01)i |
| |
| According to International Patent Classification (IPC) or to both national classification and IPC |

| B. FIELDS SEARCHED |
|---|
| Minimum documentation searched (classification system followed by classification symbols) |
| H04N5/232, H04N5/225 |
| |
| Documentation searched other than minimum documentation to the extent that such documents are included in the fields searched |
| Jitsuyo Shinan Koho        1922-1996    Jitsuyo Shinan Toroku Koho    1996-2010<br>Kokai Jitsuyo Shinan Koho   1971-2010    Toroku Jitsuyo Shinan Koho    1994-2010 |
| Electronic data base consulted during the international search (name of data base and, where practicable, search terms used) |
| |

| C. DOCUMENTS CONSIDERED TO BE RELEVANT | | |
|---|---|---|
| Category* | Citation of document, with indication, where appropriate, of the relevant passages | Relevant to claim No. |
| A | JP 2005-236508 A  (Matsushita Electric Industrial Co., Ltd.), 02 September 2005 (02.09.2005), paragraphs [0032] to [0033]; fig. 2 (Family: none) | 1-12 |
| A | JP 04-343314 A  (Olympus Optical Co., Ltd.), 30 November 1992 (30.11.1992), paragraph [0042] (Family: none) | 1-12 |
| A | JP 08-83392 A  (Toshiba Corp.), 26 March 1996 (26.03.1996), abstract (Family: none) | 1-12 |

☒  Further documents are listed in the continuation of Box C.        ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 June, 2010 (10.06.10) | 22 June, 2010 (22.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 429 177 A1**

<table>
<tr><td colspan="2" align="center">**INTERNATIONAL SEARCH REPORT**</td><td>International application No.<br>PCT/JP2010/002916</td></tr>
</table>

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2003-250804 A  (Toshiba Corp.),<br>09 September 2003 (09.09.2003),<br>abstract<br>& US 2003/0171668 A1     & CN 1442118 A | 1-12 |
| A | JP 2005-27076 A  (Nikon Corp.),<br>27 January 2005 (27.01.2005),<br>paragraph [0032]<br>& US 2006/0104523 A1     & EP 1670253 A1<br>& WO 2005/004488 A1     & KR 10-2006-0039893 A<br>& CN 1817044 A | 1-12 |
| A | JP 2001-60265 A  (Sony Corp.),<br>06 March 2001 (06.03.2001),<br>paragraphs [0059] to [0075]<br>(Family: none) | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2009048428 A